# EUROPEAN PATENT APPLICATION

(11) **EP 0 863 073 A2**
(43) Date of publication of application: **09.09.1998**
(21) Application number: 98630009.3
(22) Date of filing: 05.03.1998
(51) Int. Cl.: B64C 27/473

(54) **Composite blade and forming method**

(30) Priority: 07.03.1997 US 813483
(71) Applicant: UNITED TECHNOLOGIES CORPORATION, Windsor Locks, CT 06096-1010 (US)
(72) Inventor: Gustafson, Robert E., Windsor, Connecticut 06095 (US)
(74) Representative: Weydert, Robert

(57) **Abstract**

The blade includes a blade shell (12) formed in the shape of airfoils, wherein the blade shell (12) includes an inner surface which defines a pocket (18). A blade structural support member (14) is positioned in the pocket (18), wherein remaining portions (22) of the pocket (18) are positioned between the blade structural support member (14) and the inner surface. A shell support medium (16) is positioned in the remaining portions (22), wherein the medium comprises a plurality of individual support components (16) and a solidified molding resin is deposited between the blade structural support member (14), shell support medium (16) and blade shell (12) for securing the same together. Further, a method for forming a composite airfoiled aircraft blade is disclosed. The method includes providing a blade shell (12) having a designated inner surface; placing a plurality of individual shell support components over a plurality of mandrels (100) for aligning the components for forming a composite in the shape of airfoils; providing a blade structural support member (14); positioning the blade shell (12) and the designated inner surface around the blade structural support member (14) and the composite; removing the mandrels (100) for aligning from the components and forming an assembly of the components arranged in the shape of the airfoil; and forming the blade shell (12) into the shape of the airfoils and substantially contacting the inner surface with the support components.

## Description

### Technical Field

This invention is directed to airfoiled blades, and more particularly, to a propeller or rotor style blade having a low cost, high strength composite structure.

### Background Art

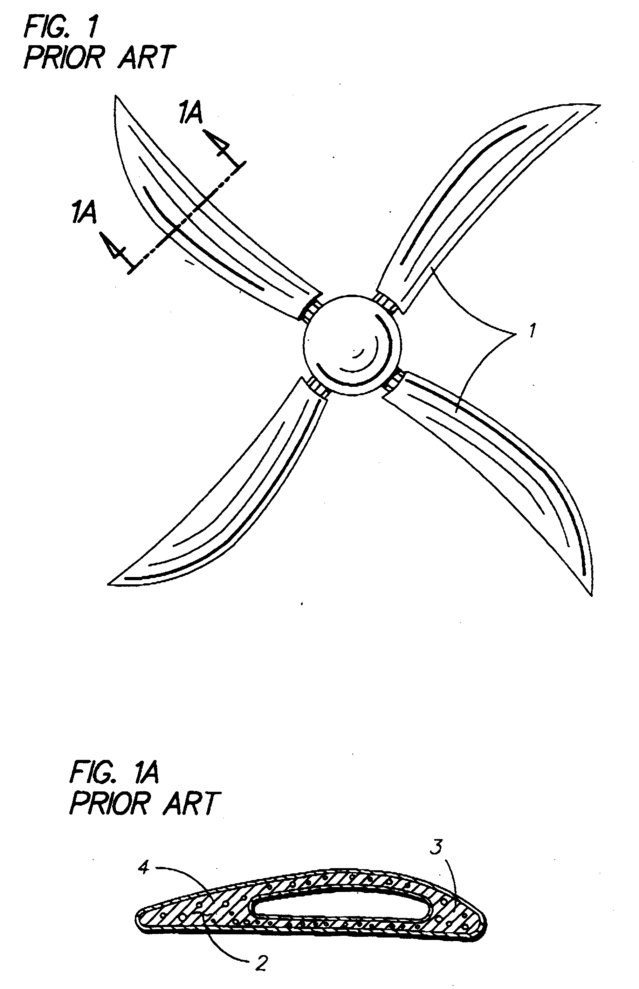

Typical propeller blades include a blade shell, and inner spar or torque tube positioned in the shell, and a secondary shell support material in the shell so as to contribute a measure of stiffness and maintain the airfoil shape of the blade. In addition, the secondary material must be strong enough to prevent panel buckling of the material comprising the typically thin blade shell. Referring to prior art FIGS. 1 and 1A, propeller blades 1 typically use a closed cell foam 2 for this secondary material. Due to the nature of the foam, a separate operation is required to fill the lead and trail edge cavities, 3 and 4, respectively. This blade construction requires the use of high temperature resin molding operations which accordingly require the use of improved foam operations whict can withstand the temperatures under such resin molding systems without collapsing. Currently available foam systems are not environmentally acceptable for use in these high temperature resin molding operations and accordingly, require special handling processes which lead to increased costs.

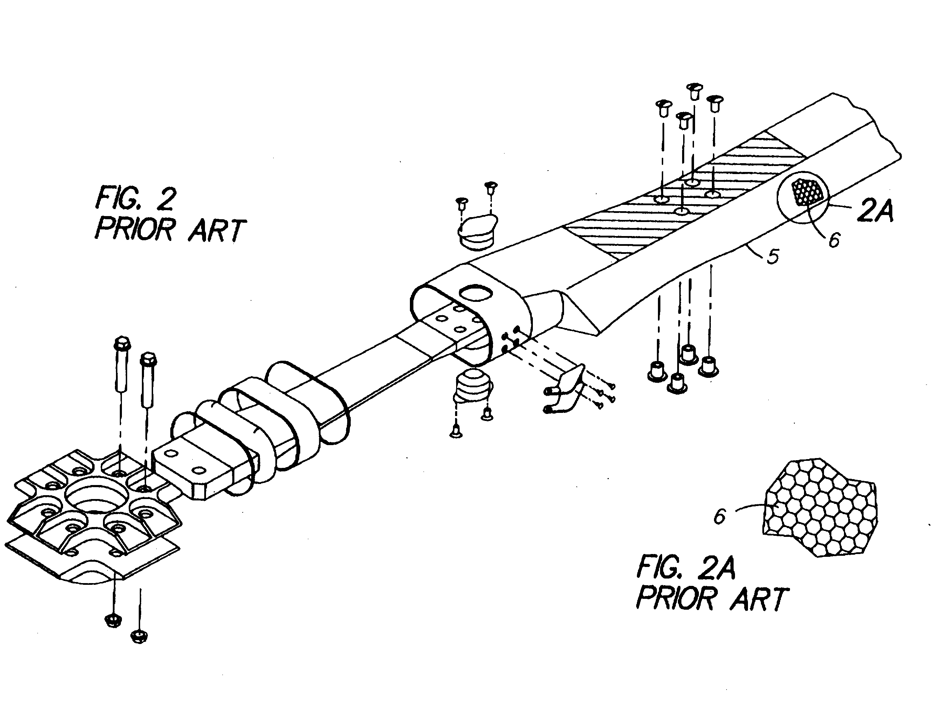

Referring now to the prior art shown in FIGS. 2 and 2A, a form of a composite rotor blade 5 is shown. The blade shown has its application as a helicopter tail rotor blade and utilizes a honeycomb material 6 to provide stiffness and buckling capacity, as the inner secondary shell support material. The honeycomb material is selected to have the strength capacity required for providing the appropriate stiffness and buckling resistance to the rotor. However, in using such honeycomb material it must be machined to a three dimensional shape with an in process operation of skinning one side with prepreg to stabilize the part during manufacture. After the non-skinned side is machined, the part is turned over, placed in a contoured form and held in place with double back tape. This process results in part movement and thickness variation. Because of the special handling and supplemental operations which must be performed, the use of the honeycomb material can be expensive and time consuming. Utilizing open cell honeycomb with a prepreg shell covering also results in nonuniform concentrations of resin rich pockets in the open cells. This effects part weight and balance.

There exists a need, therefore, for a new composite blade having a lightweight, high strength and easily formable inner shell support material and a method for forming the same.

### Disclosure of the Invention

The primary object of this invention is to provide a new composite blade structure and method for forming the same, which structure and method are improvements over the prior art.

Another object of this invention is to provide a composite blade structure and method for forming the same which uses a plurality of individual shell support components for forming an inner shell support material.

Still another object of this invention is to provide an improved composite blade structure and method for forming the same which utilizes a shell for shaping the blade into the desired airfoil, a spar inside the pocket formed by the shell and an improved shell support material between the spar and inner surface of the shell for supporting the shell and providing the necessary structural properties to the blade, which inner material comprises individual components which are easily formable into the shape of the pocket between the spar and inner surface of the shell.

Yet another object of this invention is to provide an improved composite blade structure and method for forming the same which uses a unique, lightweight, high-strength inner shell support material which comprises a plurality of individual support components.

The objects and advantages disclosed herein are achieved by the airfoiled blade of the present invention. The blade includes a blade shell formed in the shape of airfoils, wherein the blade shell includes an inner surface which defines a pocket. A blade structural support member is positioned in the pocket, wherein remaining portions of the pocket are positioned between the blade structural support member and the inner surface. A shell support medium is positioned in the remaining portions, wherein the medium comprises a plurality of individual support components and a solidified molding resin is deposited between the blade structural support member, shell support medium and blade shell for securing the same together.

The objects and advantages are further achieved by the method of the present invention for forming a composite airfoiled aircraft blade. The method includes providing a blade shell having a designated inner surface; placing a plurality of individual shell support components over a plurality of mandrels and aligning the components for forming a composite in the shape of airfoils; providing a blade structural support member; positioning the blade shell and the designated inner surface around the blade structural support member and the composite; removing the mandrels for aligning from the components and forming an assembly of the components arranged in the shape of the airfoil; and forming the blade shell into the shape of the airfoils and substantially contacting the inner surface with the support components.

### Brief Description of the Drawings

FIGS. 1 and 1A are a plan and a cross-sectional view, respectively, of a prior art composite blade which includes a shell, a spar inside the shell, and a foam material in spaces between the spar and the shell for providing the required structural support to the shell;
FIGS. 2 and 2A are a perspective and enlarged view, respectively, of a prior art tail rotor assembly for a helicopter which uses a blade having a shell, a spar and a honeycomb core material between the spar and inner surface of the shell for supporting the same;
FIG. 3 is a partial perspective and cross-sectional view of the composite blade structure of the present invention including the blade shell, the spar, and the plurality of individual support components in the spaces between the spar and the inner surface of'the shell;
FIG. 4 is a perspective view of the individual support components in accordance with the principles of the present invention; and
FIGS. 5 and 5A are perspective schematic views of the plurality of steps used in the method for forming the composite blade of the present invention.

### Best Mode for Carrying Out the Invention

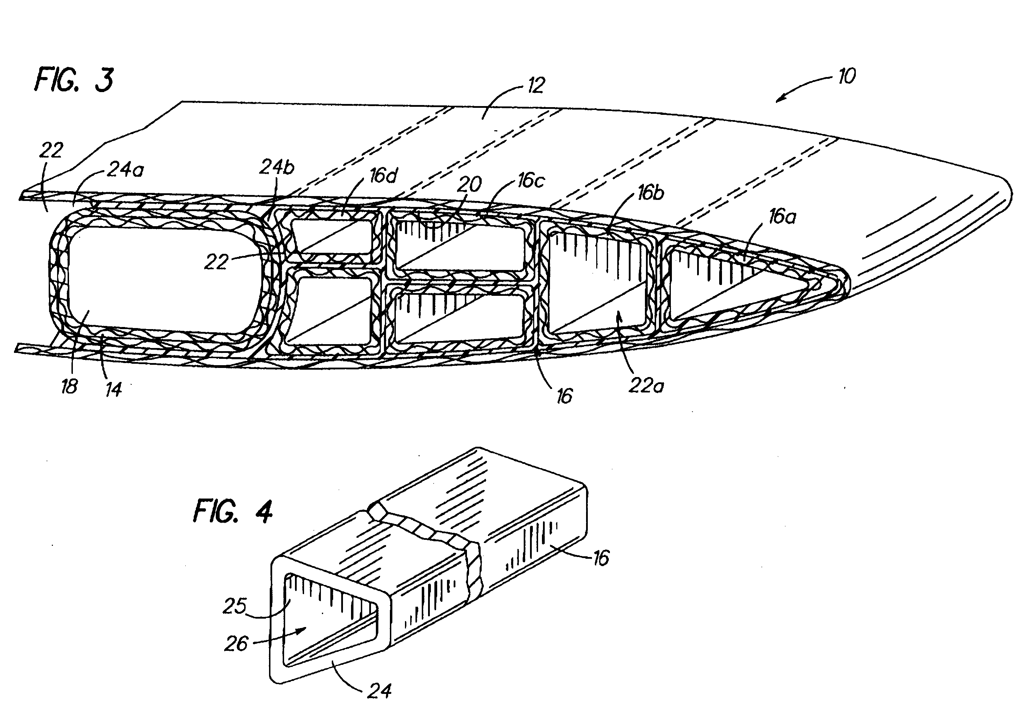

Referring now to the drawings in detail, there is shown in FIG. 3 a partial perspective and cross sectional view of the composite blade structure of the present invention, designated generally as 10. Composite blade 10 generally includes a blade shell 12, a spar ot torque tube 14, and a plurality of individual support components 16, preferably in the form of sleeves formed from braided tubes or cloth wraps. While only a partial view of the blade is shown, it is to be understood that the following description is applicable to the design of the entire blade.

Referring still to FIG. 3, shell 12 is formed from known materials, and preferably one of fiberglass, kevlar and graphite, and is adapted to be shaped through known means into the desired combination of airfoils or airfoil family which comprises blade 10. Shell 12 is hollow in nature and therefore defines a pocket 18 in which the spar 14 and individual support components 16 are positioned. Shell 12 also includes an inner wall 20 which is adapted during assembly, to be placed into contact with some surfaces of spar 14 and support components 16. Spar 14 has a tubular shape, as known in the art and extends substantially the length of blade 10 to provide the necessary structural support to the blade. As shown in FIG. 3, spar 14 extends substantially down the axial center of pocket 18 of shell 12, but does not entirely fill pocket 18. Accordingly, the remaining portions 22 of pocket 18 are occupied by the individual support components. Remaining portions 22 are typically located adjacent each of the axially extending sides 24a and 24b of spar 14.

Referring now to FIG. 4, an individual support component 16 is shown in the form of a braided sleeve or cloth wrap. The shape and size of each individual support component 16 varies, as indicated in FIG. 3, with regard to its position within shell 12. That is, as indicated in FIG. 3, component 16a is triangular in shape due to the triangular nature of the shell 12 in the volume it is used, component 16b has a parallelogram shape due also to the triangular nature of the shell and its engagement with component 16a, and as shown, component 16c and 16d have similar shapes and further include sides which mate with the outer surface of spar 14. Depending upon the shape of the airfoil, other shapes may be used such as trapezoids, rectangles, and rhombuses for forming components 16. Referring back to FIG. 4, as shown, components 16 are preferably also tubular in shape and have lengths extending substantially the length of shell 12. Accordingly, the individual support components have a circumferential wall 25 which defines a cavity 26 through the axial center thereof and component 16 is preferably formed from at least one of fiberglass and graphite, which provides the necessary structural support to the component. As shown in FIG. 3, the individual components 16 are stacked in the pocket where necessary to fill the remaining portions 22 of pocket 18, so as to provide the necessary support to shell 12. Depending again on the size and shape of the airfoil formed by shell 12, components 16 have varying heights and widths. Due to the hollow nature of components 16, substantial amounts of material are saved and a substantial benefit from reduced weight is gained.

The shell 12, spar 14 and individual support components 16 are preferably held together via the application of a resin transfer molding process, and the deposition of resin between the spar, shell and components, which is discussed in further detail in the following paragraphs.

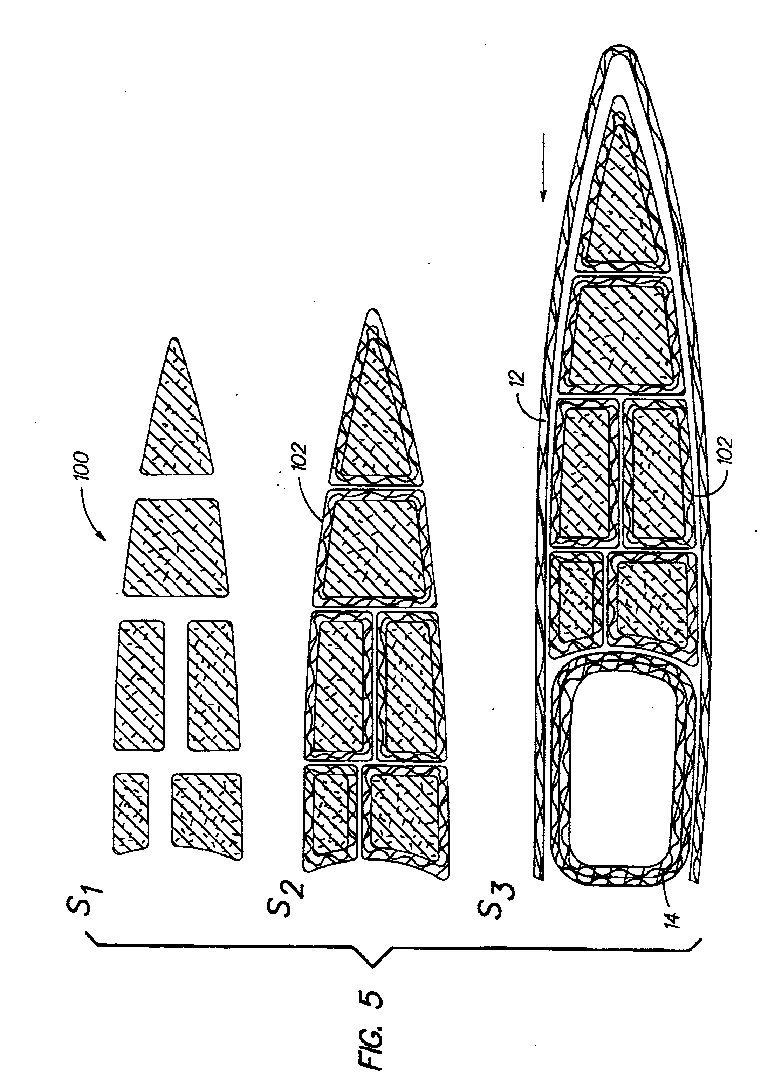

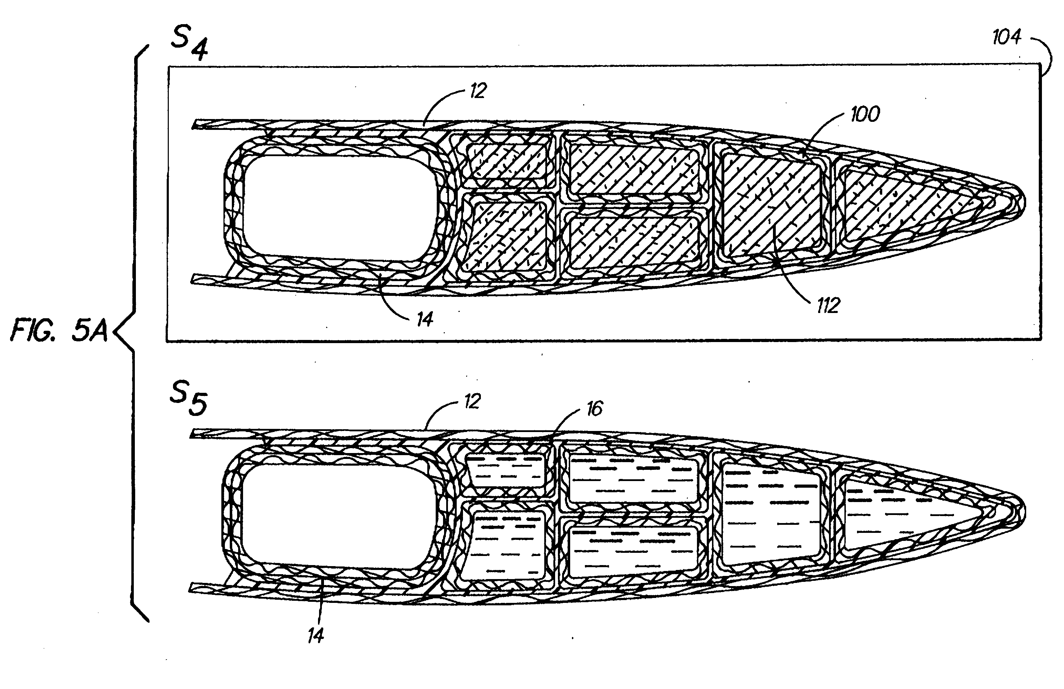

Referring now to FIGS. 5 and 5A, the method for forming composite blade 10 is described. To begin, components 16 in the form of braided sleeves or cloth wraps are formed in a known manner into the desired size and configuration, from a material such as at least one of fiberglass and graphite.

In step S₁, melt-away andlor wash-out mandrels 100 are provided and arranged in a configuration similar to that of the shape of the remaining portions 22 of pocket 18, extending substantially the length of the blade structure 10, for aligning components 16. By way of example, the filling of the portion 22a of pocket 18 to the right of spar 14, as shown in FIG. 3, is discussed in the following description, it being understood that the same discussion applies equally to portion 22b. Accordingly, the mandrels 100 as indicated in step S₁ of FIG. 5 are arranged in a configuration representative of remaining portion 22a. Melt-away mandrels 100 are preferably formed from a material which will melt away or will otherwise liquefy at a specified relatively low temperature upon later heating of the entire composite blade. An example of a melt away mandrel material is a lead alloy eutectic. An example of a wash out mandrel material is a sand clay composition which will disintegrate upon the application of water. Another example of a washout mandrel material is virtual core.

In step S₂, as shown in FIGS. 5 and 5A, braided sleeves 16 are placed over mandrels 100. As shown, sleeves 16 form the triangular shape of remaining portion 22a of pocket 18, as shown also in FIG. 3. As can be seen here, each sleeve is configured to have its cavity 26 substantially conform in shape to the outside shape of melt-away mandrels 100. In this manner as shown in step S₂, the composite of sleeves 16 form a stacked block of sleeves 16 for substantially filling remaining portion 22a of pocket 18.

In step S₃, composite 102 is placed next to spar 14 and shell 12 is moved in place around composite 102 and spar 14.

In step S₄ the entire assembly including encompassing shell 12, spar 14 and composite 102 of mandrels 100 and braided sleeves 16, is placed into a transfer molding machine 104 wherein the total blade composite is resin transfer molded in one operation. Accordingly, resin fills substantially all empty spaces between the shell, spar, and sleeves, and secures the same together.

In step S_{5,} the composite blade 10 is then cured and after the cure cycle, the blade temperature is raised to a few degrees above the cure temperature at which time the melt-away mandrels 100, which have a melting temperature below this raised to temperature, will melt and liquefy and be removed from the blade composite 10. Other types of removable mandrels, such as the wash-out mandrel, may be used which have different means for liquefying upon the application of some further step. Accordingly, upon the application of heat or other means for liquefying the mandrels, the mandrels liquefy and are removed from the cavity areas 22 of braided sleeves 16. The result is a hollow cell structure having the necessary structural properties for supporting the blade under various force distributions and also a composite blade which is low in weight and cost. The resulting composite blade, is shown, as described above, in FIG. 3.

The primary advantage of this invention is that a new composite blade structure and method for forming the same is provided, which structure and method are improvements over the prior art. Another advantage of this invention is that a composite blade structure and method for forming the same is provided, which uses a plurality of individual shell support components for forming an inner shell support material. Still another advantage of this invention is that an improved composite blade structure and method for forming the same is provided which utilizes a shell for shaping the blade into the desired airfoil, a spar inside the pocket formed by the shell and an improved shell support material between the spar and inner surface of the shell for supporting the shell and providing the necessary structural properties to the blade, which inner material comprises individual components which are easily formable into the shape of the pocket between the spar and inner surface of the shell. Yet another advantage of this invention is that an improved composite blade structure and method for forming the same is provided which uses a unique lightweight, high-strength inner shell support material which comprises a plurality of individual support components.

Although the invention has been shown and described with respect to a best mode embodiment thereof, it should be understood by those skilled in the art that the foregoing and various other changes, omissions, and additions in the form and detail thereof may be made without departing from the spirit and scope of the invention.

## Claims

1. An airfoiled aircraft blade, comprising:
a blade shell formed in the shape of airfoils, wherein said blade shell includes an inner surface which defines a pocket;
means for structurally supporting said blade positioned in said pocket, wherein remaining portions of said pocket are positioned between said means for structurally supporting and said inner surface;
shell support medium positioned in said remaining portions, wherein said medium comprises a plurality of individual support components; and
means for securing said blade shell, said means for structurally supporting and said individual support components together.

2. The blade according to claim 1, wherein said plurality of individual support components comprise a plurality of individual sleeves.

3. The blade according to claim 2, wherein said sleeves are stacked in remaining portion of said pocket and occupy said remaining portions to provide a required level of shell support.

4. The blade according to claim 3, wherein said sleeves are tubular in shape.

5. The blade according to claim 4, wherein said plurality of individual Sleeves have outer surfaces formed in a variety of shapes for properly filling said remaining portions.

6. The blade according to claim 5, wherein said variety of shapes include at least two of the shapes resembling a triangle, a rectangle, a parallelogram, and a trapezoid.

7. The blade according claim 2, wherein said remaining portions of said pocket have shaped inner cross-sections and wherein said sleeves have a combined shape when positioned in said remaining portions which approximates said shaped inner cross-sections.

8. The blade according to daim 2, wherein said sleeves are formed from at least one of braided tubes and cloth wraps.

9. The blade according to claim 8, wherein said sleeves are formed from one of graphite and fiberglass.

10. The blade according to claim 1, wherein said plurality of individual support components comprise a plurality of individual hollow cells.

11. The blade according to claim 10, wherein said hollow cells have axially extending cavities which extend the length of said blade.

12. The blade according to claim 1, wherein said means for securing is cured molding resin.

13. A method for forming a composite airfoiled aircraft blade, comprising the steps of:
providing a blade shell having a designated inner surface;
placing a plurality of individual shell support components over a plurality of means for aligning said components for forming a composite in the shape of airfoils;
providing a means for structurally supporting said blade;
positioning said blade shell and said designated inner surface around said means for structurally supporting and said composite;
forming said blade shell into a shape of a combination of airfoils and substantially contacting said inner surface with said support components; and
removing said means for aligning from said components and forming an assembly of said components arranged in said shape of the combination of airfoils.

14. The method according to claim 13, wherein said means for aligning are melt out mandrels, said step of removing comprising the step of melting away said melt-away mandrels.

15. The method according to claim 14, wherein said step of placing comprises the step of sliding said individual shell support components on said mandrels.

16. The method according to claim 15, wherein said components are braided sleeves.

17. The method according to claim 13, wherein said step of forming comprises the step of transfer molding said composite, said shell and said means for structurally supporting such that said composite shell and means for structurally supporting are secured together.

18. The method according to claim 17, wherein said step of removing comprises raising temperature of said shell, means for structurally supporting after said step of transfer molding, wherein said temperature is raised and said means for aligning are melted away.
